# EUROPÄISCHE PATENTSCHRIFT

(11) **EP 1 272 386 B1**
(45) Veröffentlichungstag und Bekanntmachung des Hinweises auf die Patenterteilung: **03.09.2003**
(21) Anmeldenummer: 01929559.1
(22) Anmeldetag: 12.04.2001
(51) Int. Cl.: B62D 55/14

(54) **RAD FÜR EIN KETTENFAHRZEUG**
WHEEL FOR A TRACKED VEHICLE
ROUE POUR VEHICULE A CHENILLES

(30) Priorität: 13.04.2000 DE 10018272; 20.03.2001 DE 10113362
(43) Veröffentlichungstag der Anmeldung: 08.01.2003
(73) Patentinhaber: Diehl Remscheid GmbH & Co., D-42857 Remscheid (DE)
(72) Erfinder: AVERKAMP, Theodor, 40591 Düsseldorf (DE); SPIES, Klaus, 42859 Remscheid (DE); HÜTZ, Volker, 42651 Solingen (DE)
(74) Vertreter: Diehl Patentabteilung
(86) Internationale Anmeldenummer: EP0104258
(87) Internationale Veröffentlichungsnummer: WO01079053

(56) Entgegenhaltungen:
- EP-A- 0 159 934
- GB-A- 2 116 922
- US-A- 5 171 074

## Beschreibung

Die Erfindung betrifft ein Rad gemäß dem Oberbegriff des Anspruchs 1 für ein Kettenfahrzeug. Bei einem solchen Rad handelt es sich bspw. um ein Laufrad, eine Stützrolle, einen Stützring oder eine Umlenkrolle für eine Gleiskette des Kettenfahrzeugs.

Eine Laufrolle aus Aluminium oder faserverstärktem Harz für leichte Kettenfahrzeuge ist aus der EP 0 159 934 A2 bekannt. Die Laufrolle besteht aus zwei kreisförmigen Scheiben mit angeformten Ringen. Die Ringe tragen außenseitig Gummibandagen. Die Scheiben bilden eine Führungsrinne zur Zentrierung von Führungszähnen von Gleiskettengliedern einer Gleiskette des Kettenfahrzeuges. Sämtliche Querschnitte der Laufrolle, insbesondere im Schulterbereich, nämlich im Stoßbereich der vertikalen Scheibe mit dem umfangseitigen Ring weisen einen verhältnismäßig dünnen Querschnitt auf. Bei Fahrten an schrägen Böschungen, Überfahren von Hindernissen, wie Felsbrocken, wird der Schulterbereich durch den relativ großen Hebel des ausladenden Ringes besonders belastet. Diese Wechselbeanspruchungen haben auf die Lebensdauer einer aus Aluminium bestehenden Laufrolle nur sehr geringen Einfluß. Jedoch ist eine aus faserverstärktem Harz bestehende Laufrolle in diesem Schulterbereich bruchgefährdet. Durch die wechselnden Verformungen des hochbelasteten Schulterbereiches mit Erwärmung erfolgen Mikro-Sprödbrüche, so daß die Faser-Kunststoffmatrix sich auflöst und bricht. Eine lange Lebensdauer wird daher durch ein derartiges Rad nicht erreicht.

Ausgehend von der EP 0 159 934 A2 liegt der Erfindung die Aufgabe zugrunde, ein Rad der eingangs genannten Art zu schaffen, das bei geringem Gewicht eine lange Lebensdauer besitzt.

Diese Aufgabe wird erfindungsgemäß durch die Merkmale des Anspruchs 1 gelöst. Bevorzugte Ausbildungen des erfindungsgemäßen Rades sind in den Unteransprüchen gekennzeichnet.

Das erfindungsgemäße Rad weist den Vorteil auf, daß im Vergleich mit Kettenfahrzeugen-Rädern aus Metall erhebliche Gewichtsreduktionen möglich sind. Außer dieser Gewichtsreduktion ergibt sich der Vorteil, daß aufgrund der Material- Eigendämpfung in Verbindung mit dem reduzierten Gewicht die Einleitung von Vibrationen, wie sie beispielsweise durch das Überrollen des Rades über die Gleiskette und den hierbei gegebenen Kettenspalt entstehen, in die Fahrzeugwanne des Kettenfahrzeuges reduziert ist. Außerdem ergibt sich durch die erfindungsgemäße Ausbildung der Vorteil einer vergleichsweise geringen Wärmesignatur, so daß die Erkennbarkeit der Räder und damit des Kettenfahrzeuges durch Wärmebildgeräte erschwert ist. Weitere Vorteile bestehen in der Reduktion der nicht gefederten Massen des erfindungsgemäße Räder aufweisenden Kettenfahrzeuges, in der Erleichterung des Handlings durch entsprechend reduzierte Bauteilgewichte, in der Reduzierung der Bevorratungsund Transportgewichte sowie in der Korrosionsbeständigkeit.

Polyamid ist der geeignete Kunststoff für das Rad. Polyamid weist grundsätzlich gegenüber dem bekannten Werkstoff für Laufrollen, nämlich faserverstärktem Harz, eine wesentlich höhere Festigkeit und Schlagzähigkeit auf und ist wärmebeständiger.

Polyamid besitzt einen Zug -E-Modul > 2000 N/mm² und ist verwendbar zwischen -40 °C und +120°C. Seine Kerbschlagzähigkeit beträgt in diesem Temperaturbereich wenigstens 10 kJ/m². Die Feuchtigkeitsaufnahme ist < 1 % bei Normklima 23/50.
Bei Gußpolyaimid PA12G beträgt die Reissdehnung > 20 % bei einer Reissgeschwindigkeit von 5 mm/min.

Das teilaromatisierte Polyamid mit 20-50 % Glasfaseranteil besitzt eine Reissdehnung > 2 % bei einer Reissgeschwindigkeit von 50 mm/min.

Weitere Einzelheiten, Merkmale und Vorteile ergeben sich aus der nachfolgenden Beschreibung von in der Zeichnung dargestellten Ausbildungen des erfindungsgemäßen Rades. Es zeigen:
- Figur 1: in einer Schnittdarstellung einen Abschnitt einer ersten Ausbildung des Rades für ein Kettenfahrzeug in Kombination mit einem Abschnitt einer Fahrzeug-Radnabe des Kettenfahrzeuges,
- Figur 2: eine der Figur 1 ähnliche Darstellung einer zweiten Ausführungsform des Rades für ein Kettenfahrzeug,
- Figur 3: eine dritte Ausbildung des Kettenfahrzeug-Rades,
- Figur 4: eine Vorderansicht eines Rades für ein Kettenfahrzeug,
- Figur 5: einen Schnitt entlang der Schnittlinie V-V in Figur 4 durch das Kettenfahrzeug-Rad,
- Figur 6: eine der Figur 5 prinzipiell ähnliche Schnittdarstellung einer anderen Ausbildung des Rades für ein Kettenfahrzeug,
- Figur 7: eine Ausbildung eines Rades mit integralem Nabenteil zur Radlagerung,
- Figur 8: eine der Figur 7 ähnliche Darstellung eines Rades mit einem damit verbundenen Nabenteil zur Radlagerung
- Figur 9: eine den Figuren 1 bis 3 ähnliche Darstellung noch einer anderen Ausführungsform des Rades für ein Kettenfahrzeug
- Figur 10: eine geschnittene Teilansicht einer Ausbildung des Kettenfahrzeug-Rades - ähnlich den in den Figuren 1 bis 3 gezeichneten Ausbildungen, wobei ein Verschleißschutz vorgesehen ist,
- Figur 11: eine der Figur 10 ähnliche Darstellung einer anderen Ausbildung des Verschleißschutzes, und
- Figur 12: noch eine andere Ausbildung des Verschleißschutzes eines Rades - ähnlich wie in den Figuren 10 und 11 verdeutlicht.

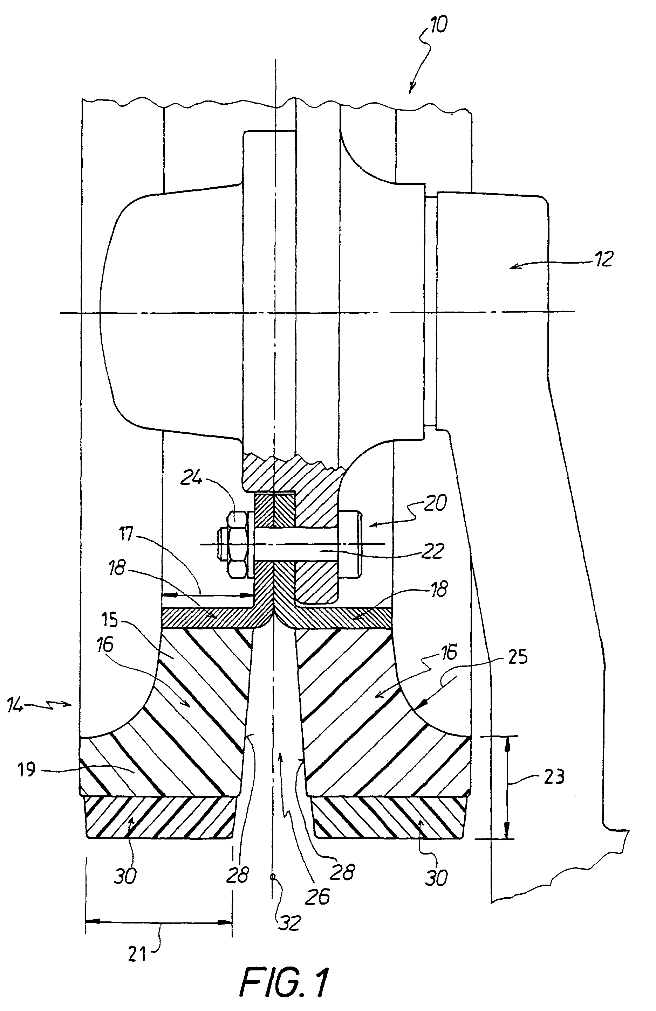

Figur 1 zeigt in einer Schnittdarstellung abschnittsweise ein Rad 10 für ein Kettenfahrzeug. Das Rad 10 ist an einer abschnittsweise gezeichneten Radnabe 12 vorgesehen. Das Rad 10 weist einen Radring 14 aus zwei Teilringen 16 auf. Der Radring 14, d.h. die beiden Teilringe 16 des Radringes 14, bestehen aus einem Kunststoffmaterial. Bei diesem Kunststoffmaterial handelt es sich um PA12G. Um eine hohe mechanische Festigkeit und Wärmebeständigkeit zu erreichen, können die beiden Teilringe 16 des Radringes 14 faserverstärkt sein.

Jeder Teilring 16 gliedert sich in eine Scheibe 15 mit einer Breite 17 und in einen einstückig angeformten Ring 19 mit einer Breite 21 und einer Dicke 23. Ein Radius ist mit 25 bezeichnet.

Jeder der beiden Teilringe 16 ist mit einem zugehörigen Flanschring 18 fest verbunden. Bei dieser Verbindung kann es sich um eine formschlüssige und/oder kraftschlüssige und/oder materialschlüssige Verbindung handeln. Die beiden Flanschringe 18 weisen ein L-förmiges Querschnittsprofil auf und sind miteinander und mit der Fahrzeug-Radnabe 12 mit Hilfe von Verbindungselementen 20 fest verbunden, die von Schrauben 22 und Muttern 24 gebildet sind.

Die Flanschringe 18 bestehen beispielsweise aus Stahl oder aus einem Leichtmetall bzw. einer Leichtmetallegierung.

Die beiden Teilringe 16 des Radringes 14 des Rades 10 sind derartig vorgesehen, daß zwischen ihnen eine umlaufende Führungsrinne 26 ausgebildet ist. Die Führungsrinne 26 ist durch einander zugewandte Führungsflächen 28 der Teilringe 16 begrenzt. Die Führungsflächen 28 der Teilringe 16 des Radringes 14 des Rades 10 dienen zur Führung des Rades 10 am Führungszahn der jeweiligen Gleiskette des Kettenfahrzeuges.

Am Außenumfang der Teilringe 16 des Radringes 14 ist jeweils ein chemisch gebundener Laufring 30 vorgesehen. Die Laufringe 30 bestehen beispielsweise aus einem Gummi oder aus einem Kunststoffmaterial bzw. aus einem anderen geeigneten Elastomermaterial. Die Laufringe 30 überrollen die Innenlauffläche der entsprechenden Gleiskette.

Bei dem in Figur 1 verdeutlichten Ausführungsbeispiel weisen die Teilringe 16 und die an deren Außenumfang vorgesehenen Laufringe 30 in Bezug auf die Führungsrinne 26 einen spiegelbildlich symmetrischen Querschnitt auf. Die Symmetrieebene ist durch die strichpunktierte Linie 32 verdeutlicht.

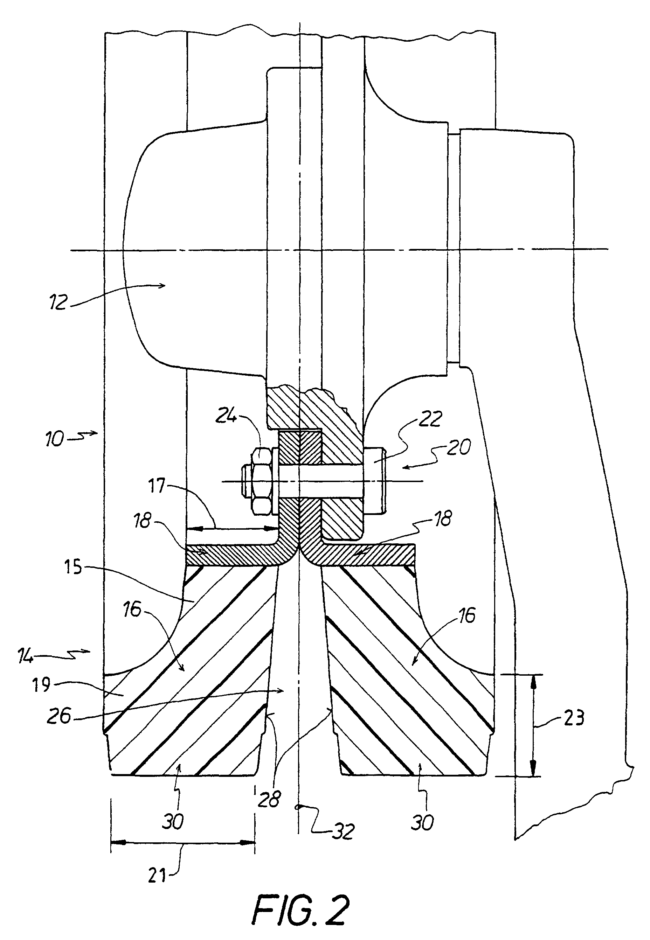

Figur 2 zeigt in einer der Figur 1 ähnlichen Darstellung eine Ausbildung des Rades 10, die sich von der in Figur 1 gezeichneten Ausführungsform dadurch unterscheidet, daß die Laufringe 30 integrale Bestandteile des jeweiligen Teilringes 16 und des Ringes 19 des Radringes 14 aus Kunststoffmaterial sind.

Gleiche Einzelheiten sind in Figur 2 mit denselben Bezugsziffern wie in Figur 1 bezeichnet, so daß es sich erübrigt, in Verbindung mit Figur 2 alle diese Einzelheiten noch einmal zu beschreiben.

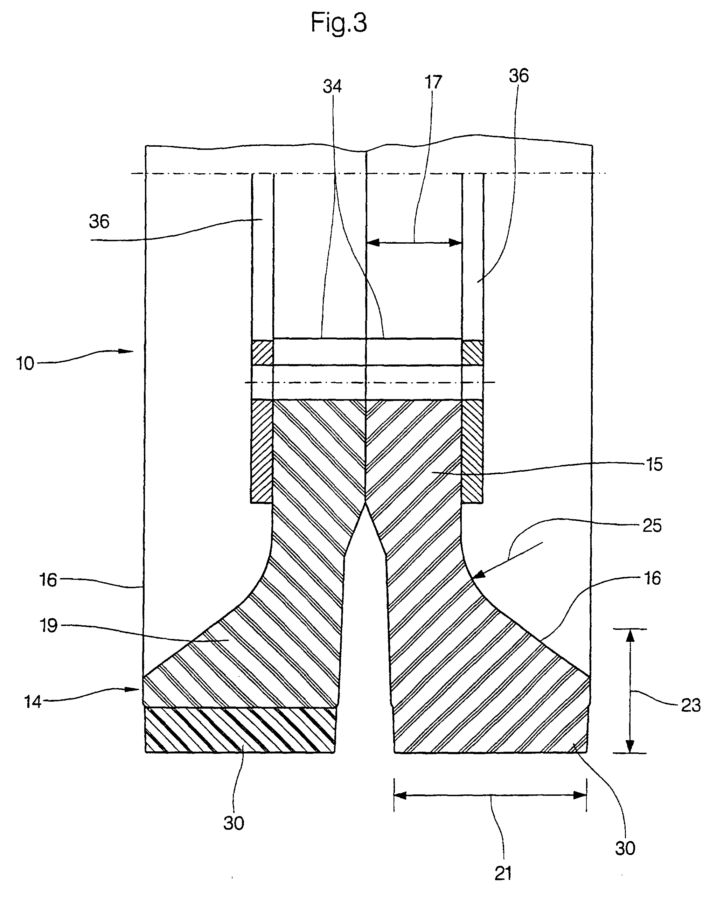

Die Figur 3 zeigt in einer den Figuren 1 und 2 ähnlichen schematischen Darstellung eine Ausbildung des Rades 10 mit einem Radring 14 bestehend aus zwei Teilringen 16 aus Kunststoffmaterial, wobei jeder der beiden Teilringe 16 einteilig mit einem zugehörigen Flanschring 34 ausgebildet ist. Am Außenumfang eines der beiden Teilringe 16 aus Kunststoffmaterial ist ein Laufring 30 - ähnlich wie bei der Ausbildung gemäß Figur 1 - vorgesehen. Der rechts gezeichnete Teilring 16 stellt eine Variante des links gezeichneten Teilringes 16 dar, indem - entsprechend zu Figur 2 - der Laufring 30 ein integraler Bestandteil des Radrings 14 bzw. des Ringes 19 ist.

Die einteilig mit den Teilringen 16 verbunden Flanschringe 34 sind gemeinsam mittels Unterlegeringe 36 an der Fahrzeug-Radnabe 12 befestigbar. Bei den Unterlegeringen 36 handelt es sich beispielsweise um einen Stahlring mit Bohrungen für Verbindungselemente 20, die Schrauben 22 und Muttern 24 aufweisen, siehe Fig. 2.

Gleiche Einzelheiten sind in Figur 3 mit denselben Bezugsziffern wie in den Figuren 1 und 2 bezeichnet, so daß es sich erübrigt in Verbindung mit Figur 3 alle diese Einzelheiten noch einmal detailliert zu beschreiben.

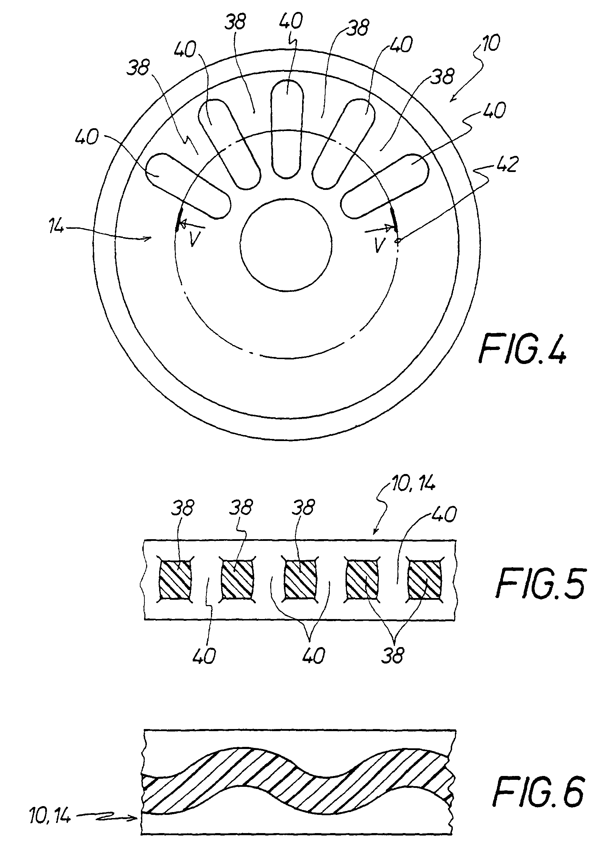

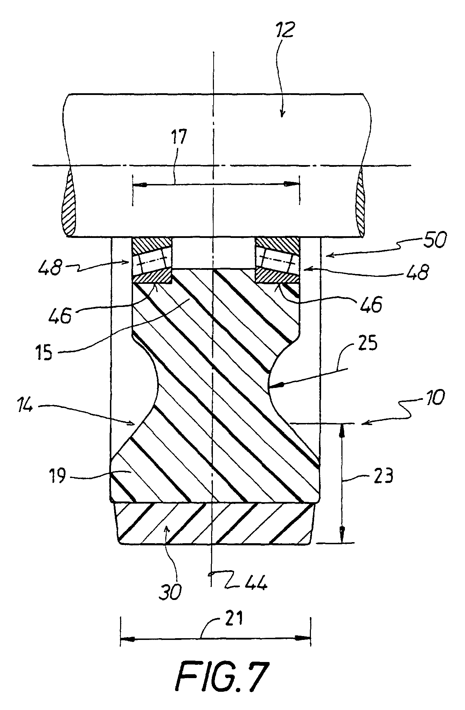

Figur 4 verdeutlicht schematisch verkleinert und nicht maßstabsgetreu ein Rad 10 in einer Vorderansicht, wobei der Radring 14 speichenartige Stege 38 aufweist, von welchen nur einige wenige zeichnerisch dargestellt sind. Die speichenartigen Stege 38 wechseln mit Durchbrüchen 40 im Radring 14 ab, von denen ebenfalls nur einige wenige zeichnerisch dargestellt sind. Die Durchbrüche 40 und die speichenartigen Stege 38 sind entlang eines Teilkreises 42 des Radringes 14 gleichmäßig verteilt vorgesehen, wie auch aus Figur 5 abschnittsweise ersichtlich ist. Eine derartige Ausbildung resultiert in einer Reduktion des Gewichtes des Rades 10 Zur Erhöhung der Formsteifigkeit des Rades 10 bzw. seines Radringes 14 aus Kunststoffmaterial ist es beispielsweise auch möglich, den Radring 14 in Umfangsrichtung mit einem gewellten Profil zu gestalten, wie es in Figur 6 abschnittsweise geschnitten verdeutlicht ist.

Figur 7 zeigt schematisch eine Fahrzeug-Radnabe 12 mit einem Rad 10 abschnittsweise in einer Schnittdarstellung. Das Rad 10 weist einen einzigen Radring 14 aus einem Kunststoffmaterial auf. Der Radring 14 besitzt ein symmetrisches Querschnitts-Profil. Das ist durch die strichpunktierte Symmetrielinie 44 verdeutlicht. Am Außenumfang des Radringes 14 ist der Fahrzeug-Radnabe 12 zugewandt mit zur Fahrzeug-Radnabe 12 konzentrischen umlaufenden Rinnen 46 ausgebildet, die zur Aufnahme von Lagerelementen 48 dienen. Bei diesen Lagerelementen 48 handelt es sich beispielsweise um Wälzlager, die eine Radlagerung 50 bilden.

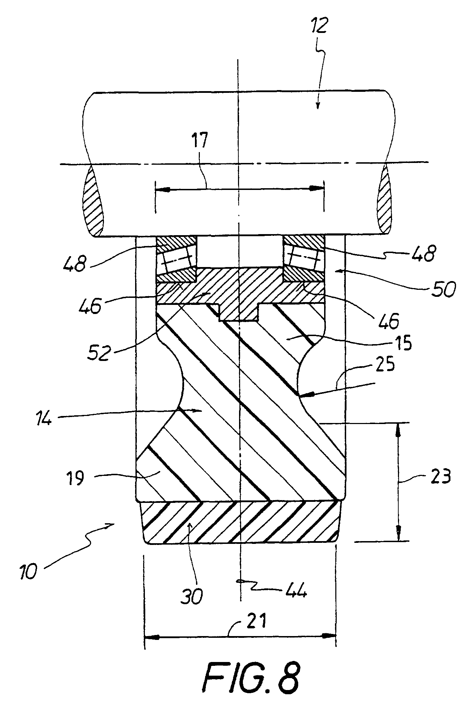

Die Figur 8 zeigt in einer der Figur 7 ähnlichen schematischen Darstellung ein Rad 10, das sich von dem in Figur 7 gezeichneten Ausführungsbeispiel insbesondere dadurch unterscheidet, daß der Radring 14 symmetrischen Querschnitts-Profiles ein Nabenelement 52 aufweist, das zur Aufnahme der Lagerelemente 48 in Form von Wälzlagern vorgesehen ist, welche die Radlagerung 50 bilden. Das ringförmige Nabenteil 52 ist mit dem Radring 14 verbunden. Bei dieser Verbindung kann es sich um eine formschlüssige und/oder kraftschlüssige und/oder materialschlüssige Verbindung handeln. Das Nabenteil 52 besteht aus einem Metall bzw. aus einer Metallegierung.

Gleiche Einzelheiten sind in Figur 8 mit denselben Bezugsziffern wie in Figur 7 bezeichnet, so daß es sich erübrigt, in Verbindung mit Figur 8 alle diese Einzelheiten noch einmal detailliert zu beschreiben.

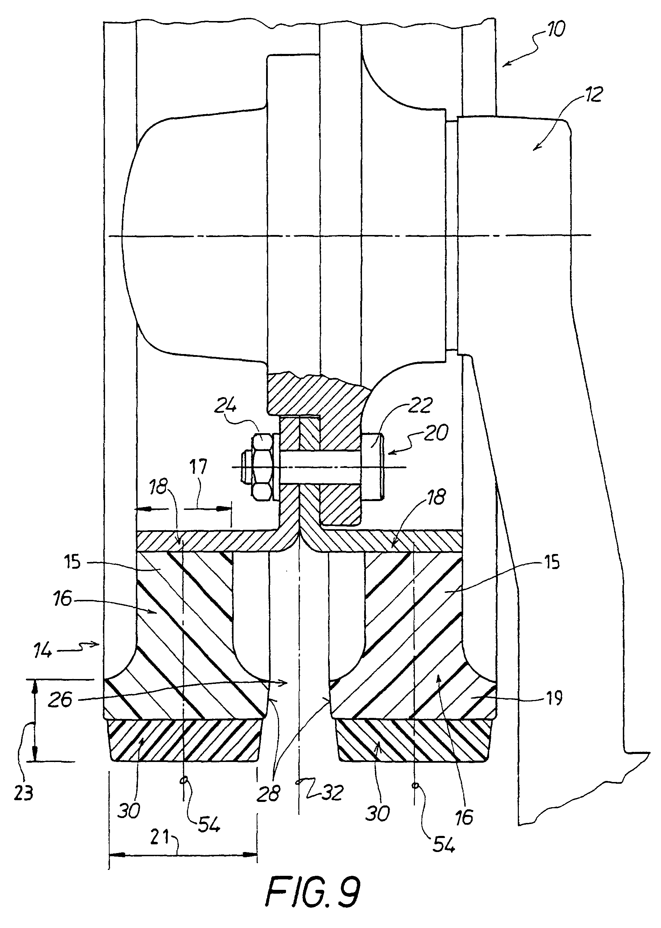

Die Figur 9 zeigt in einer den Figuren 1 bzw. 2 ähnlichen Darstellung eine Ausbildung des Rades 10, wobei der Radring 14 zwei Teilringe 16 aufweist, die jeweils ein symmetrisches Querschnitts-Profil besitzen. Die entsprechende Symmetrielinie ist durch die zugehörige strichpunktierte Linie 54 verdeutlicht. Im übrigen ist die Ausbildung gemäß Figur 9 der in Figur 1 gezeichneten Ausführungsform ähnlich, wobei gleiche Einzelheiten in den Figuren 1 und 9 jeweils mit denselben Bezugsziffern bezeichnet sind, ohne in Verbindung mit Figur 9 noch einmal detailliert beschrieben zu werden. Die symmetrische Ausbildung ist jedoch nicht zwingend.

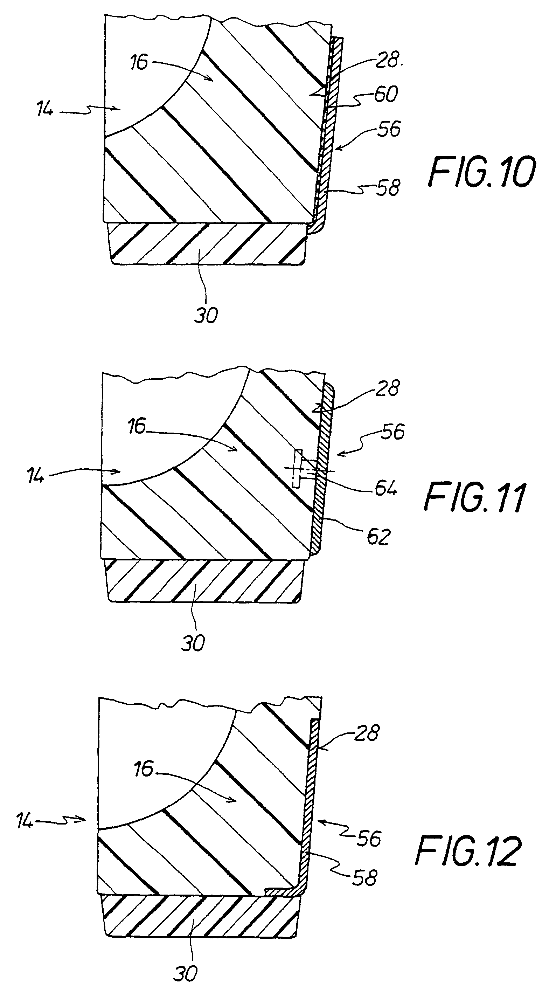

Figur 10 zeigt in einer Schnittdarstellung einen Abschnitt eines Teilringes 16 - ähnlich wie in den Figuren 1 und 3-, wobei die entsprechende Führungsfläche 28 des jeweiligen Teilringes 16 mit einem Verschleißschutz 56 versehen ist. Bei dem in Figur 10 verdeutlichten Ausführungsbeispiel ist der Verschleißschutz 56 von einem Verschleißring 58 gebildet, der an der zugehörigen Führungsfläche 28 fixiert ist. Diese Fixierung erfolgt beispielsweise mittels eines Klebers 60.

Eine andere Möglichkeit besteht beispielsweise darin, den Verschleißring 58 an den Teilring 16 anzuvulkanisieren. Anstelle des Verschleißringes 58 können auch Ringsegmente 62 treten (Figur 11).

Figur 11 verdeutlicht in einer der Figur 10 ähnlichen Darstellung abschnittsweise einen Teilring 16 mit einem Verschleißschutz 56 an der zugehörigen Führungsfläche 28, der durch Ringsegmente 62 gebildet ist. Jedes Ringsegment 62 weist mindestens einen Befestigungsnocken 64 auf. Die Befestigungsnokken 64 der Ringsegmente 62 sind in den zugehörigen Teilring 16 aus Kunststoffmaterial eingegossen. Ringsegmente 62 weisen im Vergleich zu einem Verschleißring 58 (sh. Figur 10) den Vorteil auf, daß sie dazu in der Lage sind, materialbedingte Wärmeausdehnungsunterschiede zwischen dem Material des jeweiligen Teilringes 16 und dem zugehörigen Verschleißschutz 56 auszugleichen. Die Ringsegmente 62 können am Teilring 11 auswechselbar abgebracht sein.

Die Figur 12 zeigt in einer den Figuren 10 und 11 ähnlichen schematischen Darstellung einen Teilring 16 mit einem Verschleißschutz 56 an der zugehörigen Führungsfläche 28. Der Verschleißschutz 56 ist von einem Verschleißring 58 gebildet, der in den zugehörigen Teilring 16 eingegossen ist. Der Verschleißschutz 56 kann auch von getrennten Ringsegmenten 62 gebildet sein, wie sie oben in Verbindung mit Figur 11 erwähnt worden sind.

Der Teilring 16 ist - wie bei den Ausbildungen gemäß den Figuren 1, 3 und 9 - an seinem Außenumfang jeweils mit einem Laufring 30 versehen.

Eine Zusammenfassung der Maßverhältnisse von Scheibe 15 und Ring 19 ergibt auf der Basis von Breite 17 der Scheibe 15 = 100 %

| Figuren | 1 | 2 | 3 | 7 | 8 | 9 |
|---|---|---|---|---|---|---|
| Breite 17 der Scheibe 15 = 100 % [mm] | 22 | 22 | 22 | 40 | 40 | 23 |
| Breite 21 des Ringes 19 [mm] | 40 | 35 | 43 | 50 | 50 | 39 |
| Breite 21 in % von Breite 17 | 181 | 159 | 195 | 125 | 125 | 169 |
| Dicke 23 des Ringes 19 [mm] | 24 | 24 | 30 | 28 | 28 | 20 |
| Verhältnis Dicke 23/Breite 17 | **1:1,1** | **1:1,1** | **1:1,36** | **1:0,7** | **1:0,7** | **1:0,87** |
| Dicke 23 in % von Breite 17 der Scheibe 15 | 110 | 110 | 136 | 70 | 70 | 87 |
| Verhältnis Dicke 23/Breite 21 | **1:1,67** | **1:1,45** | **1:1,43** | **1:1,78** | **1:1,78** | **1:1,95** |
| Breite 21 in % von Dicke 23 | 167 | 145 | 143 | 178 | 178 | 195 |

### Bezugszeichenliste:

- 10: Rad
- 12: Fahrzeug-Radnabe (für 10)
- 14: Radring (von 10)
- 15: Scheibe
- 16: Teilringe (von 14)
- 17: Breite (von 15)
- 18: Flanschring (für 16), (Basisring)
- 19: Ring
- 20: Verbindungselemente (zwischen 10 und 12)
- 21: Breite (von 19)
- 22: Schrauben (von 20)
- 23: Dicke (von 19)
- 24: Mutter (von 20)
- 25: Radius
- 26: Führungsrinne (von 14)
- 28: Führungsflächen (von 26)
- 30: Laufring (an 10)
- 32: strichpunktierte Linie (Symmetrieebene)
- 34: Flanschring (von 16), (Basisring)
- 36: Unterlegering (an 34)
- 38: speichenartige Stege (von 10)
- 40: Durchbrüche (in 10)
- 42: Teilkreis (für 38, 40)
- 44: strichpunktierte Linie (Symmetrieebene)
- 46: Rinnen (für 48)
- 48: Lagerelemente (für 50), (Basisring)
- 50: Radlagerung
- 52: Nabenelement (von 14), (Basisring)
- 54: strichpunktierte Linie (Symmetrieebene)
- 56: Verschleißschutz (an 28)
- 58: Verschleißring (von 56)
- 60: Kleber (für 56)
- 62: Ringsegmente (von 56)
- 64: Befestigungsnocken (an 62)

## Patentansprüche

1. Rad (10) für ein Kettenfahrzeug, welches an einer Fahrzeugradnabe (12) vorgesehen ist, wobei
das Rad (10) aus einem Kunststoff besteht, und
das Rad (10), aus einem Radring (14), bestehend aus einer vertikalen Scheibe (15) und aus einem umfangseitigen breiteren Ring (19) gebildet ist, wobei zwischen dem seitlich ausladenden Ring (19) und der Scheibe (15) ein Radius (25) vorgesehen ist,
**dadurch gekennzeichnet,**
**daß** der Radring (14) aus Polyamid mit einem
Zug-E-Modul > 2000 N/mm² und einer
Reissdehnung > 2 % besteht, und daß
der Radring (14) massiv - im Querschnitt gesehen - in der Form eines Elefantenfußes ausgebildet ist, indem die Breite (21) des Ringes (19) das 1,0 - 2,5-fache seiner Dicke (23), seine Dicke (23) das 0,5 - 1,5-fache der Breite (17) der Scheibe (15) beträgt, und die Scheibe (15) mit einem Basisring (18, 34, 52) aus Metall fest verbunden ist, wobei dieser Basisring (18, 34, 52) mit der Fahrzeugradnabe (12) verbunden ist.

2. Rad nach Anspruch 1,
**dadurch gekennzeichnet, daß**
die Abmessungen des Ringes (19) in Abhängigkeit von der Breite (17) der Scheibe (15) betragen:
Breite (21) des Ringes (19) 110 bis 210 % der Breite (17) der Scheibe (15).

3. Rad nach Anspruch 1,
**dadurch gekennzeichnet,**
**daß** das Polyamid ein Gußpolyamid PA12G mit einer Reissdehnung > 20 % bei einer Reissgeschwindigkeit von 5 mm/min oder ein teilaromatisiertes Polyamid mit 20 bis 50 % Glasfaser-Anteil mit einer Reissdehnung > 2 % bei einer Reissgeschwindigkeit von 50 mm/min. ist.

4. Rad nach einem der Anspruch 1
**dadurch gekennzeichnet,**
**daß** der Radring (14) zwei Teilringe (16) aufweist, zwischen welchen eine umlaufende Führungsrinne (26) ausgebildet ist, die durch einander zugewandte Führungsflächen (28) begrenzt ist.

5. Rad nach Anspruch 4,
**dadurch gekennzeichnet,**
**daß** die Führungsflächen (28) mit einem Verschleißschutz (55, 56) versehen sind.

6. Rad nach Anspruch 5,
**dadurch gekennzeichnet,**
**daß** der Verschleißschutz (56) aus einem, in dem Kunststoff eingelagerten verschleißfesten Composit-Werkstoff oder aus metallischen oder keramischen Stoffen als Fasern oder Whiskers oder
aus einer Beschichtung des Verschleißbereiches mit verschleißfesten Stoffen besteht.

7. Rad nach Anspruch 5,
**dadurch gekennzeichnet,**
**daß** der Verschleißschutz (56) durch Verschleißringe (58) oder durch Ringsegmente (62) gebildet ist, die an den Führungsflächen (28) festgelegt sind.

8. Rad nach Anspruch 5,
**dadurch gekennzeichnet,**
**daß** der Verschleißschutz (56) durch Beschichtungen der Führungsflächen (28) gebildet ist.

9. Rad nach einem der vorhergehenden Ansprüche,
**dadurch gekennzeichnet,**
**daß** am Außenumfang der Ringe (19) jeweils ein Laufring (30) vorgesehen ist.

10. Rad nach Anspruch 9,
**dadurch gekennzeichnet,**
**daß** der Laufring (30) integraler Bestandteil des jeweiligen Ringes (19) ist, oder
der Laufring (30) aus einem Elastomermaterial besteht und am zugehörigen Ring (19) befestigt ist.

## Claims

1. A wheel (10) for a tracked vehicle, which is mounted on the wheel hub (12) of a vehicle,
the wheel (10) being made of a plastic material, and
the wheel (10) consisting of a wheel ring (14), comprising a vertical disc (15) and a circumferential wider ring (19),
a radius (25) being provided between the laterally projecting ring (19) and the disc (15),
**characterized in that**
the wheel ring (14) is made of polyamide having a
modulus of elasticity of > 2000 N/mm² and
elongation at break of> 2 %,
**and in that**
the wheel ring (14) is made solid - when seen in cross section -
in the form of an elephant's foot,
the width (21) of the ring (19) being 1.0 to 2.5, times its thickness (23),
its thickness (23) being 0.5 to 1.5 times the width (17) of the disc (15), and the disc (15) being firmly connected to a metal base ring (18, 34, 52), which base ring (18, 34, 52) is connected to the wheel hub (12) of the vehicle.

2. A wheel according to Claim 1,
**characterized in that**
the dimensions of the ring (19), as a function of the width (17) of the disc (15), are:
width (21) of the ring (19) 110 to 210 % of the width (17) of the disc (15).

3. A wheel according to Claim 1,
**characterized in that**
the polyamide is a cast polyamide PA12G having elongation at break of > 20 % at a breaking speed of 5 mm/min, or a partly aromatized polyamide having a 20 to 50 % glass-fibre content with elongation at break of > 2 % at a breaking speed of 50 mm/min.

4. A wheel according to Claim 1,
**characterized in that**
the wheel ring (14) comprises two partial rings (16), between which a circumferential guiding groove (26) is formed which is bordered by guide surfaces (28) that face one another.

5. A wheel according to Claim 4,
**characterized in that**
the guide surfaces (28) are provided with protection (55, 56) against wear and tear.

6. A wheel according to Claim 5,
**characterized in that**
the protection (56) against wear and tear consists of a wear-resistant composite material embedded in the plastic, or of metal or ceramic materials as fibres or whiskers, or of coating the wearing area with wear-resistant materials.

7. A wheel according to Claim 5,
**characterized in that**
the protection (56) against wear and tear consists of wearing rings (58) or ring segments (62) that are fixed onto the guide surfaces (28).

8. A wheel according to claim 5,
**characterized in that**
the protection (56) against wear and tear consists of providing the guide surfaces (28) with coatings.

9. A wheel according to one of the preceding claims,
**characterized in that**
a bearing or track ring (30) is provided on the outer circumference of each ring (19).

10. A wheel according to Claim 9,
**characterized in that**
the track ring (30) is an integral part of each ring (19)
or
the track ring (30) is made of an elastomeric material and is fixed to the corresponding ring (19).

## Revendications

1. Roue (10) pour un véhicule à chenille, qui est prévue pour un moyeu de roue de véhicule (12),
la roue (10) étant en un matériau synthétique, et
la roue (10) étant constituée d'un anneau de roue (14), comprenant un disque (15) vertical et une bague (19) plus large côté périphérie, un rayon (25) étant prévu entre la bague (19) en surplomb sur le côté et le disque (15),
**caractérisée en ce que**
l'anneau de roue (14) est en polyamide avec
un module d'élasticité de traction supérieur à 2000N/mm² et
une élongation à la rupture supérieure à 2 %,
et **en ce que** la bague de roue (14) est conçue de façon massive, vue en section sous la forme d'un pied d'éléphant, du fait que la largeur (21) de la bague (19) représente 1,0 à 2,5 fois son épaisseur (23), son épaisseur (23) 0,5 à 1,5 fois la largeur (17) du disque, et le disque (15) est relié de façon fixe à un anneau de base (18, 34, 52) en métal, cet anneau de base (18, 34, 52) étant reliée au moyeu de roue du véhicule (12).

2. Roue selon la revendication 1,
**caractérisée en ce que**
les dimensions de la bague (19) mesurent en fonction de la largeur (17) du disque (15) :
largeur (21) de la bague (19) 110 à 210 % de la largeur (17) du disque (15).

3. Roue selon la revendication 1,
**caractérisée en ce que**
le polyamide est un polyamide coulé PA12G avec une élongation à la rupture supérieure à 20 % pour une vitesse de déchirement de 5 mm/mn ou un polyamide partiellement aromatisé avec une fraction de fibre de verre de 20 à 50 % avec une élongation à la rupture supérieure à 2 % pour une vitesse de déchirement de 50 mm/mn.

4. Roue selon la revendication 1,
**caractérisée en ce que**
l'anneau de roue (14) présente deux anneaux partiels (16), entre lesquels est réalisée une rainure de guidage (26) périphérique, qui est limitée par des surfaces de guidage (28) tournées les unes vers les autres.

5. Roue selon la revendication 4,
**caractérisée en ce que**
les surfaces de guidage (28) sont pourvues d'une protection contre l'usure (55, 56).

6. Roue selon la revendication 5,
**caractérisée en ce que**
la protection contre l'usure (56) est constituée d'un matériau composite enrobé dans le matériau synthétique et résistant à l'usure ou en substances métalliques ou céramiques sous la forme de fibres ou de whiskers ou
en un revêtement de la zone d'usure avec des matériaux résistants à l'usure.

7. Roue selon la revendication 5,
**caractérisée en ce que**
la protection contre l'usure (56) est formée par des bagues d'usure (58) ou par des segments de bague (62) qui sont fixés sur les surfaces de guidage (28).

8. Roue selon la revendication 5,
**caractérisée en ce que**
la protection contre l'usure (56) est formée par des revêtements des surfaces de guidage (28).

9. Roue selon l'une quelconque des revendications précédentes,
**caractérisée en ce que**
un anneau de roulement (30) est prévu chaque fois sur le pourtour extérieur des bagues (19).

10. Roue selon la revendication 9,
**caractérisée en ce que**
l'anneau de roulement (30) fait partie intégrante de la bague (19) respective,
ou
l'anneau de roulement (30) est en un matériau élastomère et est fixé sur la bague spécifique (19).
